# FASCICULE DE BREVET EUROPEEN

(11) **EP 1 780 462 B1**
(45) Date de publication et mention de la délivrance du brevet: **30.12.2009**
(21) Numéro de dépôt: 06291634.1
(22) Date de dépôt: 20.10.2006
(51) Int. Cl.: F21S 8/12, F21V 14/00, B60Q 1/08, B60Q 1/14

(54) **Procédé d'éclairage modulé d'une route et projecteur de véhicule mettant en oeuvre ce procédé**
Moduliertes Fahrzeugsbeleuchtungsverfahren und dieses Verfahren umsetzender Scheinwerfer
Process for modulated illumination of a road and headlamp using this process

(30) Priorité: 25.10.2005 FR 0510893
(43) Date de publication de la demande: 02.05.2007
(73) Titulaire: VALEO VISION, 93012 Bobigny Cedex (FR)
(72) Inventeur: Robert, Caroline, 75011 Paris (FR); Albou, Pierre, 75013 Paris (FR); Leleve, Joël, 93800 Epinay sur Seine (FR)

(56) Documents cités:
- WO-A-99/30192
- WO-A-2004/088200
- DE-A1- 4 036 199
- DE-A1- 10 242 864
- DE-A1- 10 321 564
- DE-A1- 10 344 173
- DE-A1- 19 901 413
- FR-A- 2 671 163
- GB-A- 2 395 390
- US-A- 5 918 973
- US-A- 6 144 158
- US-A1- 2004 263 346
- US-B1- 6 281 806

## Description

### Domaine de l'invention

La présente invention concerne un procédé d'éclairage d'une route en avant d'un véhicule dans lequel la lumière projetée est modulée en fonction de la détection de la présence dans l'environnement à l'avant du véhicule d'obstacles ou d'objets particuliers ou d'êtres vivants identifiés. Ces objets particuliers peuvent être constitués d'autres véhicules circulant dans le même sens ou en sens inverse, l'éclairage étant modulé pour éviter d'éblouir les conducteurs de ces autres véhicules. Ils peuvent également être constitués de sources éblouissantes telles que des panneaux de signalisation rétroréfléchissants, l'éclairage étant modulé pour éviter l'éblouissement du conducteur du véhicule par la réflexion du faisceau lumineux envoyé par son propre véhicule. Ils peuvent aussi être constitués d'obstacles identifiés comme tels, l'éclairage étant modulé pour les éclairer plus particulièrement et les porter à l'attention du conducteur. Ils peuvent encore être constitués de personnages présents en avant du véhicule et susceptibles d'être éblouis par les faisceaux lumineux émis par les projecteurs du véhicule.

La présente invention concerne également un projecteur de véhicule mettant en oeuvre ce procédé d'éclairage.

L'invention trouve des applications dans le domaine des véhicules circulant sur routes comme, par exemple, les véhicules automobiles ou les véhicules poids lourds. Elle trouve, en particulier, des applications dans le domaine de la projection de lumière par ces véhicules.

### État de la technique

Compte tenu du nombre croissant de véhicules circulant sur les routes, il est nécessaire de procurer, à ces véhicules et à leurs conducteurs, un éclairage le mieux adapté possible afin de réduire les risques d'accidents. En particulier la nuit, il est important que le conducteur puisse avoir une vision optimale de la route qui s'étend devant lui ainsi que des bas cotés de cette route. Autrement dit, pour des questions de sécurité, on cherche à améliorer l'éclairage de la route située devant le véhicule et, ainsi, à améliorer la vision de la scène de route par le conducteur du véhicule.

Actuellement, tous les véhicules roulant sur la route comportent un dispositif d'éclairage de la route, utilisé en particulier la nuit ou lors d'intempéries. Classiquement, il existe sur les véhicules automobiles deux types d'éclairages :
- un éclairage dit "de route " qui éclaire la route intégralement sur une longue distance, d'environ 200 mètres, considérée comme l'infini pour le conducteur, et
- un éclairage dit "de croisement "qui éclaire la route sur une courte distance, de l'ordre de 60 mètres, pour éviter d'éblouir les conducteurs des véhicules circulant en sens inverse ou ceux des véhicules qui précèdent, ou encore les personnes pouvant se situer sur la route ou sur les bas cotés de la route.

L'éclairage de route est réalisé au moyen de projecteurs de route qui envoient chacun un faisceau lumineux dirigé vers l'horizon.

L'éclairage de croisement est réalisé au moyen de projecteurs de croisement, appelés aussi projecteurs codes, qui envoient chacun un faisceau de lumière descendante, dont la pente est typiquement de 1%, donnant une visibilité sur une distance de l'ordre de 60 à 80 mètres. Le faisceau est limité vers le haut, dans un plan perpendiculaire à l'axe longitudinal du véhicule, par une ligne appelée coupure, et définie par une norme. Cette coupure est une ligne d'éclairage maximum au-dessus de laquelle il est interdit d'éclairer en mode de croisement. Dans les pays à circulation à droite, elle est horizontale sur toute la largeur de la route et sur le bas coté gauche de la route et elle forme un angle de 15 degrés au-dessus de l'horizontale sur le bas coté droit de la route.

Ce faisceau de lumière descendante a pour but d'éviter d'éblouir les conducteurs des véhicules circulant en sens inverse et ceux des véhicules circulant dans le même sens, dans la scène de route s'étendant devant le véhicule.

Cependant, un tel faisceau de lumière descendante n'offre qu'une visibilité réduite au conducteur du véhicule, à l'avant du véhicule. Cet éclairage est souvent insuffisant pour permettre au conducteur d'avoir une bonne visibilité de l'ensemble de la scène de route afin de pouvoir anticiper d'éventuels virages ou d'éventuels obstacles.

Au contraire, l'éclairage de route permet d'éclairer la route s'étendant devant le véhicule jusqu'à sensiblement l'horizon. Pour cela, l'éclairage de route envoie un faisceau lumineux dirigé vers l'horizon, c'est-à-dire droit devant le véhicule, ce qui ne manque pas d'éblouir les conducteurs des autres véhicules circulant sur la même route. De même, ce faisceau d'éclairage est reçu par les panneaux de signalisation qui, s'ils sont fortement rétroréfléchissants, peuvent constituer une source éblouissante pour le conducteur du véhicule émettant le faisceau de route.

Actuellement, il n'existe que des dispositifs imparfaits permettant de moduler l'éclairage produit et d'éclairer la scène de route à l'infini ou sur une longue distance sans éclairer des zones prédéterminées de cette scène.

On connaît par exemple les projecteurs décrits dans les documents US-A-6 144 158 et DE-102 42 864.

On connaît par exemple un projecteur permettant de moduler le faisceau principal d'éclairage du véhicule sur la route. Un tel projecteur est décrit dans les demandes de brevets DE - 199 07 943 ou US - 5 938 319. Ce projecteur permet de projeter sur la route une indication lumineuse, telle qu'une flèche, pour indiquer, par exemple, la direction que doit suivre le conducteur. Cette indication est alors éclairée tandis que la zone qui l'entoure est sombre, c'est-à-dire non éclairée. Une telle indication lumineuse est réalisée au moyen d'un projecteur comportant une pluralité de micromiroirs ayant des dimensions de l'ordre du 1/10^{ième} ou du 1/100^{ième} de millimètre.

Un autre type de projecteur d'automobile avec modulation de lumière est décrit dans les demandes de brevets EP - 0 266 908 et US - 4 985 816 et JP - 04 08 13 37. Ce type de projecteur à lumière modulée a pour but de permettre la projection d'un éclairage de croisement ou de route avec uniquement une seule source de lumière. Pour cela, il comporte, entre un réflecteur et une source lumineuse unique ou entre le réflecteur et un système optique de formation du faisceau lumineux, un écran d'occultation interposé sur le trajet des rayons lumineux et comprenant des zones d'occultation constituées de cristaux liquides susceptibles de conférer à ces zones plusieurs états de transparence. Ainsi, lorsque l'éclairage est en mode "éclairage route ", l'écran d'occultation est totalement transparent, permettant la projection de la totalité du faisceau lumineux sur la route. En mode "éclairage de croisement ", l'écran d'occultation est en partie occultant, permettant ainsi la projection d'une partie seulement du faisceau lumineux émis par la source lumineuse et, en particulier, la partie située sous la ligne de coupure.

Le document JP - 04 08 13 37 présente un autre mode de réalisation selon lequel l'écran à cristaux liquides est disposé directement sur la surface même du miroir réflecteur entourant la source lumineuse, de manière à en contrôler le facteur de réflexion, et ainsi moduler le faisceau de rayons lumineux réfléchis par ce miroir associé à l'écran à cristaux liquides.

Cependant, en pratique, les projecteurs répondant à ce type de conception ne sont pas réalisables. En effet, un écran à cristaux liquides entraîne une baisse de rendement très importante en termes de flux lumineux, de l'ordre de 50 %, ce qui implique l'utilisation de sources lumineuses très puissantes pour obtenir après traversée de l'écran à cristaux liquides un faisceau lumineux conforme aux diverses réglementations concernant l'intensité lumineuse en différents points caractéristiques d'un faisceau de route et d'un faisceau de croisement. Par ailleurs, un écran d'occultation à cristaux liquides comme celui décrit dans ces demandes de brevets, quel que soit son emplacement, est très sensible à l'énergie reçue et, en particulier, à la température à laquelle il est soumis. Ainsi, un écran d'occultation à cristaux liquides soumis à une énergie trop forte est forcément défaillant. Or, la source lumineuse utilisée pour un éclairage de route est une source lumineuse puissante, trop puissante pour que l'écran d'occultation à cristaux liquides puisse résister physiquement. Il y a donc une contradiction entre l'emploi d'un écran à cristaux liquides et l'utilisation de sources lumineuses puissantes.

On connaît également du document US - 6 281 806 un dispositif d'aide à la conduite, dans lequel un ou plusieurs capteurs sont utilisés pour analyser l'environnement du véhicule et sont reliés à une source lumineuse pilotée. Un processeur reçoit les informations du ou des capteurs et détermine si un objet particulier dans cet environnement présente un danger potentiel et doit être plus particulièrement porté à l'attention du conducteur, cet objet pouvant être un personnage, un animal ou un obstacle inerte. Dans l'affirmative, le processeur émet un signal de commande pour qu'une source lumineuse assure un éclairage de l'objet particulier détecté, et le signale ainsi au conducteur. Cette source lumineuse est commandée de manière à éclairer de manière continue l'objet détecté identifié, quels que soient les mouvements respectifs du véhicule et/ou de l'objet détecté.

De manière plus précise, selon ce document, le dispositif comporte un ou plusieurs détecteurs de l'environnement du véhicule, un système de traitement du signal d'image fourni par ce ou ces détecteurs, qui identifie un obstacle dans l'environnement du véhicule et qui délivre des signaux de commande à un servomoteur contrôlant l'orientation en site et en azimut d'une source lumineuse de haute intensité vers cet obstacle. Il en résulte d'une part que ce dispositif électromécanique est de conception relativement complexe pour pouvoir s'accommoder des contraintes liées à l'automobile telles que les vibrations, et d'autre part que ce dispositif n'est capable que de prendre en compte qu'un seul obstacle à la fois, et une seule direction d'éclairage de cet obstacle.

### Exposé de l'invention

L'invention se place dans ce contexte et elle a justement pour but de remédier aux inconvénients des techniques exposées précédemment en proposant un système d'éclairage capable de n'éclairer que certaines zones spécifiques de la route tout en assurant une extinction dans des zones dans lesquelles il est estimé que cet éclairage serait inopportun, parce qu'il serait par exemple éblouissant soit pour les conducteurs des autres véhicules circulant sur la même route, soit pour le conducteur lui-même du véhicule émettant le faisceau lumineux, du fait de la rétroréflexion provoquée par exemple par des panneaux de signalisation, soit encore pour des personnages présents devant le véhicule, ou encore parce qu'il serait dirigé vers des zones dans lesquelles il est estimé préférable de moins attirer l'attention du conducteur que dans d'autres zones qui doivent être éclairées.

Dans la présente invention, les zones dans lesquelles l'éclairage doit être modulé, soit en y projetant moins de lumière dans le but de ne pas éblouir le conducteur d'un autre véhicule, le conducteur du véhicule émetteur du faisceau lumineux ou un personnage dans l'environnement avant du véhicule, soit en y projetant en permanence de la lumière pour attirer l'attention du conducteur du véhicule, seront appelées des « zones critiques ».

La détection des zones critiques dans lesquelles il convient de ne pas envoyer de rayons lumineux doit être effectuée de manière simple, rapide et fiable. Les deux fonctions de détection et d'éclairage modulé doivent pouvoir être remplies par des systèmes physiquement distincts, afin de pouvoir disposer des informations sur l'environnement du véhicule pour d'autres besoins ou applications, ou à l'aide d'un seul système physique. Ces deux fonctions de détection et d'éclairage modulé doivent être remplies en temps réel, et donc ne nécessiter que des calculs simples et rapides. L'invention permet également a contrario de proposer un système d'éclairage capable de n'éclairer que certaines zones critiques de la route pour les porter plus particulièrement à l'attention du conducteur, tout en assurant une extinction ou un éclairage d'intensité moindre dans des zones considérées comme étant moins porteuses d'informations, ou non critiques.

La détection des zones critiques dans lesquelles il convient au contraire d'envoyer des rayons lumineux pour attirer l'attention du conducteur du véhicule peut également être effectuée de manière simple, par exemple à l'aide des algorithmes issus des traitements d'images vides qui permettent de distinguer dans une série d'images consécutives les trajectoires des obstacles mobiles de celles des obstacles fixes. Les temps de réaction du système de détection d'obstacles mobiles est inversement proportionnel au nombre de capteurs utilisés.

Pour atteindre le but qu'elle s'est fixée, l'invention propose un procédé d'éclairage pour véhicule, dans lequel le faisceau de lumière émise est modulé spatialement en fonction des informations recueillies sur l'environnement du véhicule à l'avant de celui-ci, par exemple en fonction de la présence d'éventuelles sources lumineuses sur la route devant le véhicule, que ces sources soient indépendantes du véhicule émetteur du faisceau, comme celles des autres véhicules circulant sur la même route dans le sens contraire ou dans le même sens, ou que ces sources soient constituées de réflexions du faisceau émis, par exemple par des panneaux de signalisation rétroréfléchissants, ou encore en fonction de la présence d'obstacles à éclairer de manière préférentielle ou de la présence de personnages qu'il convient de ne pas éblouir.

Ce procédé d'éclairage a pour but d'émettre un faisceau d'éclairage formé de la superposition de plusieurs faisceaux partiels associés chacun à une source lumineuse, chaque faisceau partiel étant émis dans une direction choisie, et d'éteindre la source lumineuse d'au moins un faisceau partiel de manière à ce que le faisceau résultant ne contienne pas ou peu de rayons lumineux dans une direction prédéterminée. Le procédé comporte en outre la détection d'obstacles, de personnages ou de sources lumineuses extérieures se trouvant dans la scène de route, et la commande de l'alimentation individuelle des sources lumineuses pour moduler le faisceau lumineux émis de manière à ce qu'il ne contienne pas de rayons lumineux émis en direction du voisinage de ces sources lumineuses extérieures ou de ces personnages, ou de manière à ce qu'il contienne des rayons lumineux dirigés principalement en direction du voisinage des obstacles identifiés.

En effet, si par exemple les sources lumineuses extérieures sont constituées par les projecteurs d'un véhicule circulant en sens inverse, ou par les feux arrière d'un véhicule circulant dans le même sens, il convient de ne pas éblouir les conducteurs de ces véhicules. De même, si les sources lumineuses extérieures sont constituées par des rétroréflexions provoquées par des panneaux de signalisation sur le bas côté de la route ou au dessus de celle-ci, il est avantageux de ne pas éclairer ces panneaux de signalisation trop fortement, de manière à continuer à distinguer les indications qu'ils portent, sans que la lumière rétroréfléchie devienne éblouissante. De la même façon, dans le cas où des personnages ont été détectés dans l'environnement à l'avant du véhicule, il est préférable de ne pas en éclairer la partie supérieure, pour ne pas les éblouir et qu'ils conservent une vision nette de leur propre environnement.

Les conducteurs des autres véhicules ainsi que les personnages sur la route et les panneaux de signalisation sont ainsi dans une ombre relative, voire même totale dans le faisceau d'éclairage, les conducteurs des autres véhicules et les personnages n'étant pas éblouis et les panneaux de signalisation n'étant pas éblouissants.

De manière similaire, dans le cas où des obstacles ont été identifiés en avant du véhicule, il est utile de les éclairer de manière continue, pour que le conducteur du véhicule ne les perde pas de vue et adapte sa conduite en conséquence.

L'invention propose également un projecteur d'éclairage mettant en oeuvre ce procédé d'éclairage modulé.

De façon plus précise, l'invention concerne un procédé d'éclairage d'une scène de route par un projecteur de véhicule, caractérisé en ce qu'il comporte les opérations suivantes :
- émission d'une pluralité de faisceaux lumineux partiels associés chacun à une source lumineuse, chaque faisceau lumineux partiel étant émis dans une direction prédéterminée, la superposition des faisceaux partiels constituant un faisceau d'éclairage,
- modulation d'au moins une source lumineuse pour contrôler le flux lumineux d'au moins un faisceau lumineux partiel émis dans une direction prédéterminée dans le faisceau d'éclairage ;

Selon d'autres caractéristiques de ce procédé,
- il comporte en outre une étape de détection dans la scène de route de zones critiques ;
- les zones critiques sont constituées des têtes de personnages détectés dans la scène de route devant le véhicule automobile ;
- les zones critiques sont constituées de sources lumineuses extérieures au véhicule dans la scène de route devant le véhicule automobile.
- les sources lumineuses extérieures au véhicule sont détectées dans les directions prédéterminées dans le faisceau d'éclairage ;
- au moins une source lumineuse est modulée pour contrôler le flux lumineux d'au moins un faisceau lumineux partiel émis dans une direction dans laquelle une source lumineuse extérieure est détectée ;
- l'étape de détection est effectuée par un système de détection ;
- le procédé comporte en outre une étape de traitement du signal fourni par le système de détection pour piloter les sources lumineuses ;
- l'étape de détection est effectuée par les sources lumineuses utilisées en réception ;
- chaque source lumineuse est pilotée par le circuit électronique de pilotage de manière à fonctionner alternativement en un mode d'émission et en un mode de réception ;
- le procédé procure un faisceau d'éclairage additionnel à un faisceau de croisement ;
- le procédé modifie la coupure d'un faisceau de croisement.

Avantageusement, ce procédé est appliqué sur la zone d'éclairage de la route située au-dessus de la coupure.

L'invention concerne également un projecteur mettant en oeuvre ce procédé.

Ce projecteur d'éclairage modulé d'une scène de route pour véhicule comportant au moins une source lumineuse associée à un dispositif de formation d'un faisceau lumineux d'éclairage.

Selon l'invention, le projecteur comporte une pluralité de sources lumineuses, chacune émettant en association avec le dispositif de formation d'un faisceau lumineux d'éclairage un faisceau lumineux partiel la superposition des faisceaux lumineux partiels formant un faisceau d'éclairage, chaque source lumineuse étant modulable individuellement pour contrôler le flux lumineux d'au moins un faisceau lumineux partiel émis dans une direction prédéterminée dans le faisceau d'éclairage.

Selon d'autres caractéristiques du projecteur,
- le dispositif de formation d'un faisceau lumineux d'éclairage est constitué d'un miroir réflecteur du type à surface complexe, au foyer duquel sont disposées les sources lumineuses ;
- le dispositif de formation d'un faisceau lumineux d'éclairage est constitué d'une lentille convergente au foyer de laquelle sont disposées les sources lumineuses ;
- les sources lumineuses sont constituées par des deuxièmes extrémités de guides de lumière transmettant la lumière reçue par leur première extrémité ;
- les premières extrémités des guides de lumière reçoivent chacune la lumière d'un dispositif modulateur de lumière dont le facteur de transmission peut être commandé individuellement ;
- le dispositif modulateur de lumière est constitué d'un obturateur mécanique ou électromécanique, de polymères piézo-électriques, de lentilles défocalisables mécaniquement, de micro-miroirs ;
- le dispositif modulateur de lumière est constitué d'un obturateur ou d'un modulateur optique, d'un verre électrochromique ou d'un système à cristaux liquides électro-commandables ;
- le dispositif modulateur de lumière est constitué d'une lentille à focale variable électriquement ;
- les dispositifs modulateurs de lumière sont intercalés entre la face d'entrée des guides de lumière et la face de sortie de guides de lumière primaires dont les faces d'entrée reçoivent toutes la lumière d'un dispositif émetteur de lumière unique ;
- les premières extrémités des guides de lumière reçoivent chacune la lumière d'un dispositif d'émission de lumière dont l'intensité peut être commandée individuellement ;
- les dispositifs d'émission de lumière sont constitués de diodes électroluminescentes émettant une lumière blanche ;
- des dispositifs injecteurs de lumière sont interposés entre les diodes électroluminescentes et les faces d'entrée des guides de lumière ;
- les diodes électroluminescentes sont pilotées par un circuit électronique de pilotage ;
- le projecteur comporte en outre un système de détection de sources lumineuses externes dans la scène de route devant le véhicule ;
- le système de détection est constitué d'une caméra thermique, d'une caméra infrarouge ou d'une caméra vidéo CCD ou CMOS ;
- le système de détection est constitué de photodiodes, de phototransistors ou de diodes électroluminescentes utilisées en réception ;
- les diodes électroluminescentes sont pilotées par le circuit électronique de pilotage de manière à fonctionner alternativement en un mode d'émission et en un mode de réception ;
- les sources lumineuses sont disposées selon une ligne horizontale ou selon deux lignes horizontales superposées, le faisceau d'éclairage étant un faisceau complémentaire à un faisceau de croisement.

### Brève description des Figures

D'autres buts, caractéristiques et avantages de la présente invention ressortiront clairement de la description qui va maintenant être faite d'un exemple de réalisation donné à titre non limitatif en référence aux dessins annexés sur lesquels :
La Figure 1 représente schématiquement une route éclairée par un éclairage de croisement classique combiné avec un éclairage selon l'invention ;
La Figure 2 représente schématiquement les différents éléments formant un système d'éclairage modulé selon l'invention ;
La Figure 3 représente schématiquement un premier mode de réalisation d'un projecteur produisant un éclairage selon l'invention ;
La Figure 4 représente schématiquement un deuxième mode de réalisation d'un projecteur produisant un éclairage selon l'invention ;
La Figure 5 représente schématiquement un aménagement d'une source lumineuse utilisable dans les projecteurs des Figures 3 et 4
La Figure 6 représente schématiquement un troisième mode de réalisation d'un projecteur produisant un éclairage selon l'invention ;
La Figure 7 représente schématiquement un exemple d'interrupteur optique utilisable dans le projecteur de la Figure 6, et
La Figure 8 représente schématiquement un exemple d'un système combiné de d'éclairage et de détection utilisable pour mettre en oeuvre le procédé selon l'invention.

### Description détaillée de modes de réalisation de l'invention

L'invention propose un procédé d'éclairage modulé d'une scène de route en fonction des informations reçues par un ensemble de détection et traitées par un calculateur. Ce procédé peut être utilisé pour moduler un faisceau de route ou un faisceau de croisement dans leur ensemble. Il peut également être utilisé pour éclairer une scène de route en complément d'un éclairage de croisement classique. Ce procédé offre alors une étendue d'éclairage plus importante que pour un éclairage de croisement habituel, sans risque d'éblouissement pour les autres conducteurs des véhicules circulant sur la même route ou par les panneaux de signalisation sur les bas cotés de la route ou au-dessus de celle-ci. Dans ce dernier cas, le procédé de l'invention propose d'éclairer la route au-dessus de la coupure en n'envoyant pas de rayons lumineux en direction de sources lumineuses extérieures se trouvant dans cette zone.

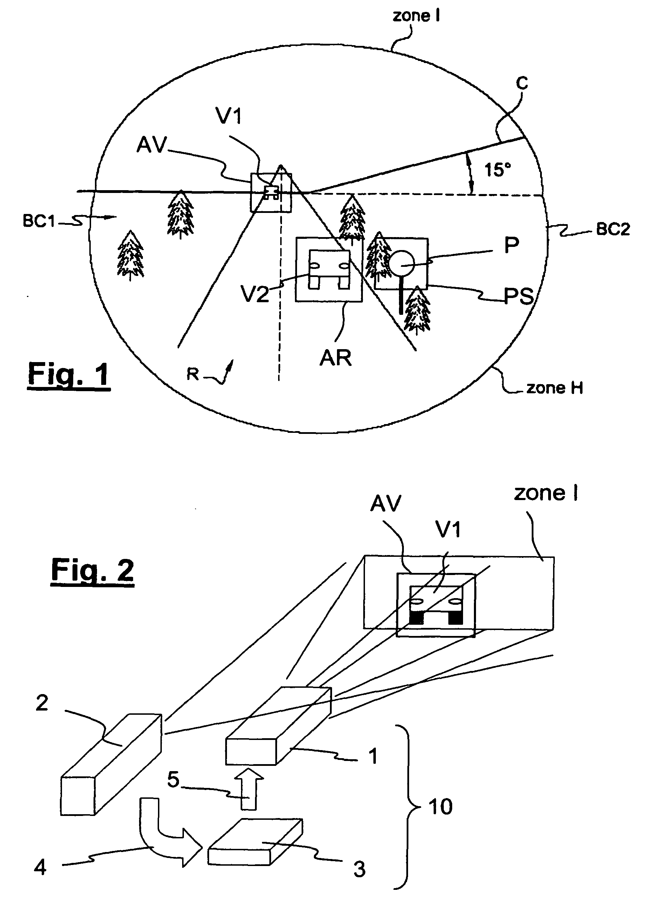

Sur la Figure 1, on a représenté un exemple de scène de route. Sur cet exemple, la route est référencée R. Elle comporte un bas coté gauche BC1 et un bas coté droit BC2. Un premier véhicule V1 circulant en sens inverse est sur l'autre file de circulation. Il est situé dans la zone 1, située au dessus de la coupure, c'est-à-dire la zone de la scène de route éclairée par le projecteur de l'invention. Ce véhicule V1 qui est situé dans la zone d'éclairage à l'infini est dans une région AV du faisceau lumineux dépourvue de rayons lumineux, permettant à son conducteur de ne pas être ébloui.

Un deuxième véhicule V2 circulant dans le même sens est sur la même file de circulation. Il est situé dans la zone H, située en dessous de la coupure, c'est-à-dire la zone de la scène de route éclairée par le projecteur de l'invention. Ce véhicule V2 qui est situé dans la zone d'éclairage proche est dans une région AR du faisceau lumineux dépourvue de rayons lumineux, permettant à son conducteur de ne pas être ébloui.

Un panneau de signalisation P est sur le bas coté droit de la route. Il est situé dans la zone d'éclairage de croisement habituel, zone H. Il n'est pas éclairé par l'éclairage de croisement émis par les projecteurs du véhicule, car il est dans une région PS du faisceau lumineux dépourvue de rayons lumineux, permettant au conducteur du véhicule émettant le faisceau d'éclairage selon l'invention de ne pas être ébloui par les rétroréflexions induites par ce panneau de signalisation.

D'une façon générale, dans l'invention, on détecte toutes les sources lumineuses situées dans la scène de route, qu'il s'agisse de sources extérieures provenant d'autres véhicules, ou de sources passives constituées de panneaux de signalisation rétroréfléchissants.

La Figure 2 représente, fonctionnellement, le projecteur de l'invention avec un exemple d'éclairage de la scène de route. L'exemple de scène de route de la Figure 2 montre le véhicule V1 dans une région AV autour de lui, dans la zone I d'éclairage.

La région AV dépourvue de rayons lumineux est créée au moyen d'un système optique 1 associé à un système de détection de sources lumineuses 2 et, éventuellement à un système électronique 3 de traitement des signaux générés par le système de détection 2. Le système optique 1 et le système électronique de traitement des signaux 3 forment ensemble un système 10 de modulation de la lumière émise par une source lumineuse. Sur la Figure 2, on a représenté le système électronique 3 et le système optique 1 indépendants l'un de l'autre. En pratique, le système électronique 3 peut être intégré au sein du système optique 1 comme on le verra par la suite.

Le système de détection 2 peut être constitué d'une caméra thermique, qui réalise des prises d'images de la scène de route située devant le véhicule. Ces images de la scène de route, appelées images naturelles, sont transférées au système de traitement 3, comme schématisé par la flèche 4, qui effectue alors un traitement électronique de ces images. Ce traitement permet de localiser les sources de chaleur dans la scène de route. Ces sources de chaleur sont constituées par d'autres véhicules en mouvement, ou par des êtres vivants, êtres humains ou animaux. Un tel traitement des images est décrit dans le document FR 2 850 616, au nom de la Demanderesse. Le procédé décrit dans ce document est performant pour détecter des sources dites « chaudes », comme par exemple des personnages. Une fois qu'un personnage est détecté et localisé dans la scène de route située devant le véhicule, un traitement d'image simple permet de situer la tête de ce personnage, par analyse de la silhouette et de la forme caractéristique des épaules.

Plus précisément, dans le cas où la caméra 2 est une caméra thermique capable de détecter une source chaude telle qu'un être vivant ou un véhicule à moteur thermique en mouvement, par exemple une caméra thermique à 10 microns, alors la caméra détecte les sources chaudes qui apparaissent plus brillantes sur l'image que le reste de l'image de la scène de route. On obtient alors une image thermique. On sélectionne ensuite, pour cette image thermique, une zone à traiter, c'est-à-dire la zone la plus brillante de l'image. Cette sélection est déterminée en fonction d'un seuil de brillance prédéfini. Au-delà de ce seuil, on considère que l'élément matriciel de la caméra correspond à une zone chaude et donc à la présence d'un véhicule en mouvement ou à un être vivant. Chaque élément micro-bolométrique de la matrice de la caméra est ainsi seuillé pour déterminer s'il s'agit d'une zone chaude ou non de la caméra.

En d'autres termes, le traitement d'image réalisé par le système électronique 3 consiste à sélectionner les zones de l'image thermique au-delà d'une certaine température, c'est-à-dire d'un seuil prédéfini. On obtient alors une image seuillée qui fait apparaître uniquement la source chaude dans la scène de route. Cette image seuillée comporte deux niveaux, à savoir un niveau blanc et un niveau noir. De préférence, la source chaude apparaît sur un niveau saturé en blanc tandis que le reste de l'image apparaît sur un niveau saturé en noir. Un procédé analogue peut être mis en oeuvre avec une caméra sensible travaillant dans le visible ou le proche infrarouge.

Le système de détection 2 peut également être une caméra infrarouge associée à une détection par mouvement. Dans ce cas, la caméra assure la prise d'image d'une scène de route et le système électronique 3 détecte et localise les sources lumineuses extérieures par une détection de leur mouvement relatif. Selon une variante de l'invention, une détection thermique peut être couplée avec une détection de mouvement pour sécuriser la détection de sources lumineuses extérieures.

Le système de détection 2 peut également être constitué d'une caméra vidéo CCD ou CMOS, réalisant l'acquisition des images de la scène de route devant le véhicule. Le traitement des images ainsi acquises peut alors être effectué comme cela a été décrit dans la demande de brevet FR 04 12 266 du 18 novembre 2004 au nom de la Demanderesse.

Le système de traitement 3 selon ce document antérieur effectue alors les opérations suivantes : acquisition d'une pluralité d'images représentant des scènes de route successives, puis extraction des sources lumineuses présentes dans ces images successives. Pour chacune des sources lumineuses ainsi extraites des images successives, le système de traitement 3 calcule alors :
- un relevé de la trajectoire de chaque source lumineuse à partir des positions successives occupées par la source lumineuse extraite dans les images successives ;
- une comparaison de la trajectoire relevée à une pluralité de trajectoires types afin de déterminer une catégorie de sources à laquelle appartient la source lumineuse extraite ;
- la détection d'une condition de circulation demandant la commutation des projecteurs d'un premier état d'éclairement vers un second état d'éclairement à partir d'au moins une catégorie de sources déterminée à laquelle appartient au moins la source lumineuse extraite.

Ce document montre en effet que le simple mouvement d'une source lumineuse dans le champ de vision du conducteur, ou celui d'une caméra embarquée, est caractéristique notamment des évènements suivants :
- croisement d'un véhicule venant d'en face ;
- croisement d'un véhicule venant d'un virage à gauche ;
- croisement d'un véhicule venant d'un virage à droite ;
- croisement d'un panneau de signalisation ;
- croisement d'un lampadaire ;
- dépassement du véhicule dans lequel est mis en oeuvre le procédé par un autre véhicule ; et
- véhicule qui précède sur la route celui dans lequel est mis en oeuvre le procédé.

Le procédé décrit dans ce document est très performant pour localiser les sources lumineuses dans la scène de route devant le véhicule, et pour identifier la nature de ces sources lumineuses uniquement selon le mouvement de leur image sur la surface sensible du système de détection de sources lumineuses 2. Connaissant ainsi la nature des sources lumineuses rencontrées, le système de traitement des signaux en déduit la condition de circulation dans laquelle se trouve le véhicule équipé, et en particulier s'il est nécessaire de commander la commutation des projecteurs du véhicule d'un premier état " feux de route " vers un second état " feux de croisement " ou inversement. Le traitement tel qu'il vient d'être décrit est réalisé en temps réel.

Ces exemples de réalisations montrent qu'il est possible de savoir de manière fiable, dans une scène de route devant un véhicule, d'une part de quelle direction proviennent des rayons lumineux, et quelle en est la source émettrice : projecteurs d'un véhicule circulant en sens inverse, feux de signalisation d'un véhicule circulant dans le même sens ou panneau de signalisation rétroréfléchissant, et d'autre part dans quelle direction est situé un personnage, et plus particulièrement dans quelle direction, en site et en azimut, est située sa tête.

Conformément à la présente invention, le système optique 1 forme non pas un faisceau d'éclairage unique à l'aide d'une source lumineuse unique, mais un faisceau composite, résultant de la superposition de plusieurs faisceaux lumineux élémentaires, générés chacun par une source lumineuse élémentaire, chacune de ces sources lumineuses étant par exemple contrôlable individuellement en fonction des informations reçues du système de détection 2 et traitées par le système de traitement 3.

Les sources lumineuses élémentaires ou individuelles dans la présente invention doivent être entendues comme recouvrant deux notions : d'une part des sources lumineuses à proprement parler, comme par exemple une diode électroluminescente, contrôlables indépendamment les unes des autres, et d'autre part des extrémités de sortie de fibres optiques ou de guides de lumière, dont les autres extrémités d'entrée reçoivent de la lumière d'une même source unique commune, une modulation de chaque fibre optique ou de chaque guide de lumière étant effectuée pour que l'intensité lumineuse de chaque extrémité de sortie puisse être commandée indépendamment des autres extrémités de sortie.

Ainsi, en fonction des informations recueillies sur l'environnement du véhicule, il sera possible de n'allumer que les sources lumineuses élémentaires correspondant à des faisceaux lumineux élémentaires dans la direction desquels aucune source lumineuse extérieure ou passive n'a été détectée par le système de détection 2 associé au système de traitement 3.

Le procédé de création de la zone AV exempte de rayons lumineux est le suivant : le système de traitement 3 détecte dans les images prises par la caméra 2 une source lumineuse dans la scène de route située devant le véhicule, par exemple dans la zone I au-dessus de la coupure C, localise cette source dans l'espace et détermine sa nature : projecteur, feu de signalisation ou panneau de signalisation.

Après cette localisation de la source lumineuse extérieure et son identification, le système électronique 3 détermine quelle partie de faisceau lumineux émis par le véhicule est dirigée vers cette direction, et commande l'extinction de la source lumineuse élémentaire correspondante.

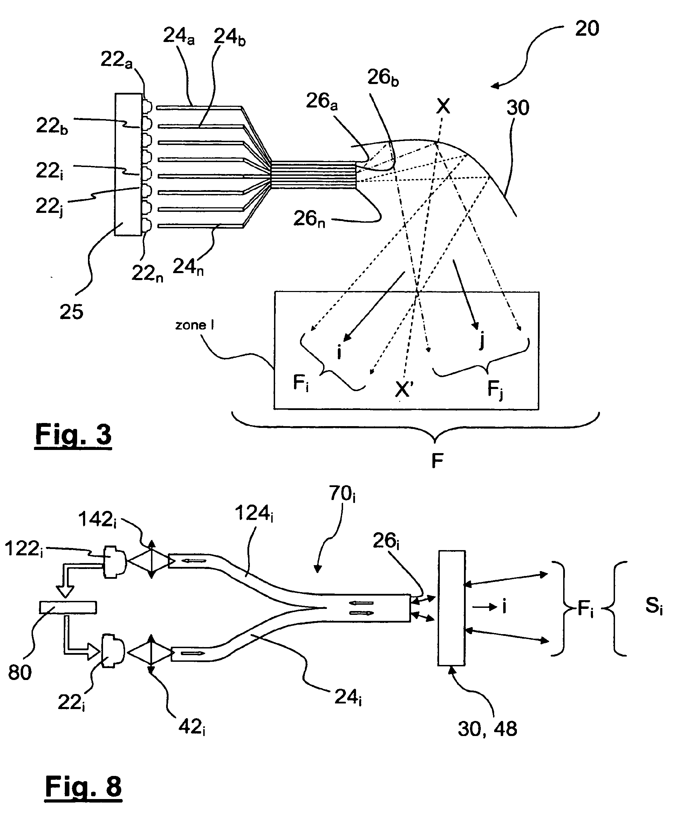

On a représenté schématiquement sur la Figure 3 un premier exemple de réalisation d'un ensemble projecteur utilisable pour mettre en oeuvre le procédé selon la présente invention. Cet ensemble projecteur, désigné globalement par la référence 20, comporte une pluralité de sources lumineuses 22ₐ, 22_{b}, ..., 22ₙ. Ces sources lumineuses sont par exemple constituées de diodes électroluminescentes polychromatiques, émettant une lumière blanche. Les diodes 22ₐ, 22_{b}, ..., 22ₙ sont pilotées par un circuit électronique de pilotage 25.

On pourra par exemple utiliser des barrettes de diodes électroluminescentes disponibles actuellement en tant que diodes de puissance, comportant plusieurs diodes juxtaposées sur un même substrat.

Chaque diode 22ₐ, 22_{b}, ..., 22ₙ est associée à un guide de lumière 24ₐ, 24_{b}, ..., 24ₙ, respectivement, par exemple par l'intermédiaire d'un dispositif optique, de manière à ce que la majeure partie du flux lumineux émis par la diode soit injectée dans une première extrémité du guide de lumière correspondant. Les deuxièmes extrémités 26ₐ, 26_{b}, ..., 26ₙ des guides 24ₐ, 24_{b}, ..., 24ₙ sont réunies de manière à être côte à côte, et alignées les unes avec les autres.

L'ensemble des deuxièmes extrémités 26ₐ, 26_{b}, ..., 26ₙ est alors placé au foyer d'un miroir réflecteur 30, du type à surface complexe, tel que par exemple décrit dans les documents FR 2 760 067 et FR 2 760 068, au nom de la demanderesse. Les miroirs décrits dans ces documents, destinés à équiper des projecteurs pour véhicules automobiles, ont la particularité de répartir la lumière verticalement (formation de la coupure horizontale et de celle qui forme un angle de 15 degrés) ainsi qu'horizontalement (répartition de la lumière au sol) en assurant une très bonne homogénéité. En conséquence la glace de protection du projecteur, est libérée de toute fonction optique, et elle est donc lisse, ou très faiblement déviatrice.

L'ensemble des deuxièmes extrémités 26ₐ, 26_{b}, ..., 26ₙ au foyer du miroir 30 est ainsi placé au même endroit par rapport au miroir 30 que celui où est placé le filament d'une lampe à incandescence classique.

Lorsque toutes les sources lumineuses 22ₐ, 22_{b}, ..., 22ₙ sont allumées, l'ensemble des extrémités 26ₐ, 26_{b}, ..., 26ₙ des guides de lumière 24ₐ, 24_{b}, ..., 24n se comporte alors comme un filament continu. Le miroir 30 forme alors un faisceau F d'éclairage conventionnel. Ce faisceau F est en fait composite, et il résulte de la superposition des faisceaux lumineux élémentaires, générés chacun par une des sources lumineuses 22ₐ, 22_{b}, ..., 22ₙ. Ainsi, comme on le voit schématiquement sur la Figure 3, le faisceau Fᵢ est généré dans la direction i par l'extrémité 26ⱼ du guide 24ᵢ, elle-même alimentée en lumière par la source lumineuse 22ᵢ, et le faisceau Fⱼ est généré dans la direction j par l'extrémité 26ⱼ du guide 24ⱼ, elle-même alimentée en lumière par la source lumineuse 22ⱼ. Les faisceaux partiels Fᵢ, Fⱼ constituent ainsi un faisceau F, organisé autour d'un axe optique X-X'.

Dans ces conditions, si la source 22ᵢ est seule éteinte, toutes les autres étant allumées, le faisceau F comprend alors tous les faisceaux élémentaires Fₐ, F_{b}, ..., Fₙ, sauf le faisceau Fᵢ. Il en résulte donc que le faisceau lumineux F éclaire la scène de route devant le véhicule, sauf dans la direction i, correspondant au faisceau élémentaire Fᵢ engendré par la source lumineuse 22ᵢ. De même, si les sources 22ᵢ et 22ⱼ sont seules éteintes, le faisceau F comprend alors tous les faisceaux élémentaires Fₐ, F_{b}, ..., Fₙ, sauf les faisceaux Fᵢ et Fⱼ. Il en résulte donc que le faisceau lumineux F éclaire la scène de route devant le véhicule, sauf dans les directions i et j, correspondant aux faisceaux élémentaires Fᵢ et Fⱼ engendré par les sources lumineuses 22ⱼ et 22ⱼ. Le faisceau F présente donc dans les directions i et j des zones d'ombre, telles que les zones AV, AR et PS sur la Figure 1.

Si le projecteur 20 est utilisé pour procurer un faisceau de croisement, les directions i et j seront telles que les zones d'ombre soient confondues avec les zones AR et PS de la Figure 1, de manière à ne pas éblouir le conducteur du véhicule V2 par l'intermédiaire de son rétroviseur, et à ne pas être ébloui par la rétroréflexion dans le panneau P.

Si le projecteur 20 est utilisé pour éclairer une scène de route en complément d'un éclairage de croisement classique, il peut par exemple éclairer la route au-dessus de la coupure horizontale pour offrir un éclairage additionnel à un éclairage de croisement conventionnel, c'est-à-dire dans la zone I de la Figure 1. La direction i sera telle que la zone d'ombre soit confondue avec la zone AV de la Figure 1, de manière à ne pas éblouir le conducteur du véhicule V1.

Si le projecteur 20 est utilisé pour procurer un faisceau de route, les directions i, j et k seront telles que les zones d'ombre soient confondues avec les zones AV, AR et PS de la Figure 1, de manière à ne pas éblouir les conducteurs des véhicules V1 et V2, et à ne pas être ébloui par la rétroréflexion dans le panneau P.

Il suffira alors que le système de traitement 3, après avoir localisé une source lumineuse extérieure telle que V1, V2 ou P sur la Figure 1, commande l'extinction des sources 22ᵢ, 22ⱼ et/ou 22ₖ pour créer les zones d'ombre AV, AR et/ou PS de la Figure 1, et ainsi éviter l'éblouissement des conducteurs des autres véhicules et/ou éviter d'être soi-même ébloui par les panneaux de signalisation.

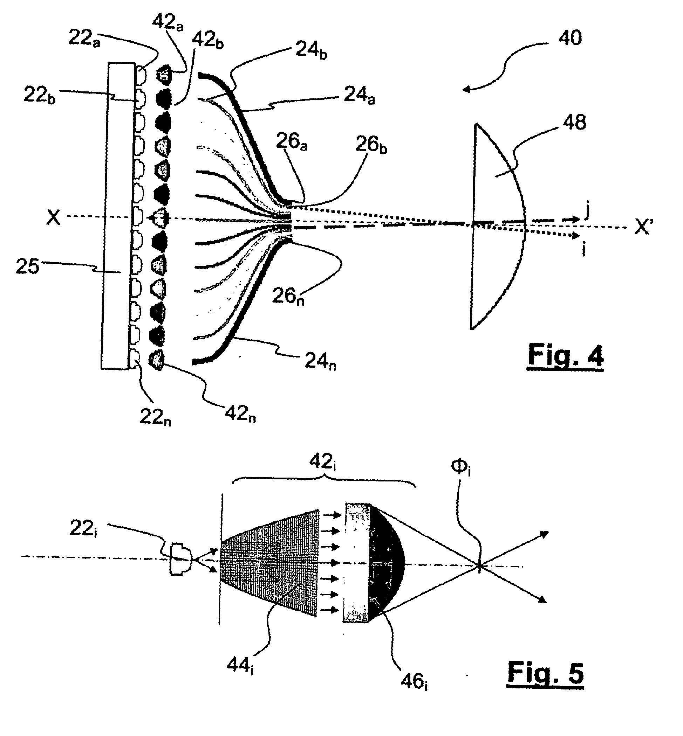

On a représenté schématiquement sur la Figure 4 un deuxième mode de réalisation d'un ensemble projecteur utilisable pour mettre en oeuvre le procédé selon la présente invention. Cet ensemble projecteur, désigné globalement par la référence 40, comporte là encore une pluralité de sources lumineuses 22ₐ, 22_{b}, ..., 22ₙ, qui peuvent également être constituées de diodes électroluminescentes polychroma-tiques, émettant une lumière blanche. Les diodes 22ₐ, 22_{b}, ..., 22ₙ sont comme dans l'exemple précédent pilotées par un circuit électronique de pilotage 25.

Les diodes 22ₐ, 22_{b}, ..., 22ₙ sont là encore associées à des guides de lumière 24ₐ, 24_{b}, ..., 24ₙ, respectivement. Pour assurer que la plus grande partie possible du flux lumineux émis par la diode soit injectée dans une première extrémité du guide de lumière correspondant, on peut interposer, entre les diodes et les guides de lumière, un dispositif injecteur de lumière 42ₐ, 42_{b}, ..., 42ₙ. Un exemple de tel dispositif injecteur de lumière 42ᵢ est représenté plus en détail sur la Figure 5. On voit sur cette Figure que le dispositif est constitué d'un premier élément collimateur 44ᵢ, recevant la totalité du flux lumineux émis par la diode 22ᵢ, et transformant toute cette lumière en un faisceau de rayons parallèles. Ce faisceau parallèle est alors reçu par un élément convergent 46ᵢ, qui focalise toute la lumière à son foyer Fᵢ. Il suffit alors de placer la première extrémité d'un guide de lumière 24ᵢ à ce foyer Fᵢ pour être certain de récupérer dans le guide 24ᵢ (non représenté sur la Figure 5) la totalité de la lumière émise par la diode 22ᵢ. Un tel dispositif injecteur de lumière peut bien sûr être utilisé avec les guides de lumière du mode de réalisation de la Figure 3.

Comme dans le mode de réalisation de la Figure 3, l'ensemble des deuxièmes extrémités 26ₐ, 26_{b}, ..., 26ₙ des guides 24ₐ, 24_{b}, ..., 24ₙ sont réunies de manière à être côte à côte, et alignées les unes avec les autres. L'ensemble des deuxièmes extrémités 26ₐ, 26_{b}, ..., 26ₙ est alors placé au foyer d'une lentille convergente 48 plan-convexe, du même type que celles qui sont utilisées pour concevoir des modules d'éclairage elliptiques.

On rappellera pour mémoire que dans un tel module d'éclairage elliptique, une source lumineuse telle que le filament d'une lampe à incandescence ou l'arc électrique d'une lampe à décharge, est placée au premier foyer d'un miroir sensiblement en forme d'ellipsoïde de révolution. Un tel miroir forme une image réelle de cette source à son second foyer, engendrant ainsi une tache de concentration lumineuse. Une lentille convergente est disposée de telle sorte que son foyer objet coïncide avec le second foyer du miroir elliptique, de sorte que cette lentille forme à l'infini une image de la tache de concentration lumineuse. Cette image à l'infini constitue alors le faisceau lumineux d'éclairage procuré par le module elliptique, typiquement un faisceau de route. Pour obtenir un faisceau de croisement, on dispose habituellement un cache dans le plan focal objet de la lentille convergente, ce cache interceptant la partie des rayons lumineux qui émergeraient de la lentille convergente en étant dirigés au dessus de la coupure réglementaire.

Les deuxièmes extrémités 26_{a,} 26_{b}, ..., 26ₙ des guides 24ₐ, 24_{b,} ..., 24ₙ constituent alors des sources lumineuses distinctes, situées au même endroit que la tache de concentration d'un module d'éclairage elliptique conventionnel. De la même façon que pour ce module, la lentille 48 forme des images à l'infini de ces sources de lumière 26ₐ, 26_{b}, ..., 26ₙ.

Comme dans le cas d'un module d'éclairage elliptique, l'ensemble de ces images à l'infini constitue alors un faisceau lumineux d'éclairage F projeté par la lentille convergente plan-convexe, et composé des faisceaux lumineux partiels Fᵢ, Fⱼ, le faisceau résultant F étant là encore organisé autour d'un axe optique X-X'.

Comme pour le mode de réalisation de la Figure 3, il suffira que le système de traitement 3, après avoir localisé une direction dans laquelle il n'est pas souhaitable d'émettre des rayons lumineux, commande l'extinction d'une ou de plusieurs sources 22ᵢ, 22ⱼ et/ou 22ₖ pour créer dans le faisceau lumineux total les zones d'ombre AV, AR et/ou PS de la Figure 1, et ainsi éviter l'éblouissement des conducteurs des autres véhicules et/ou éviter d'être soi-même ébloui par les panneaux de signalisation.

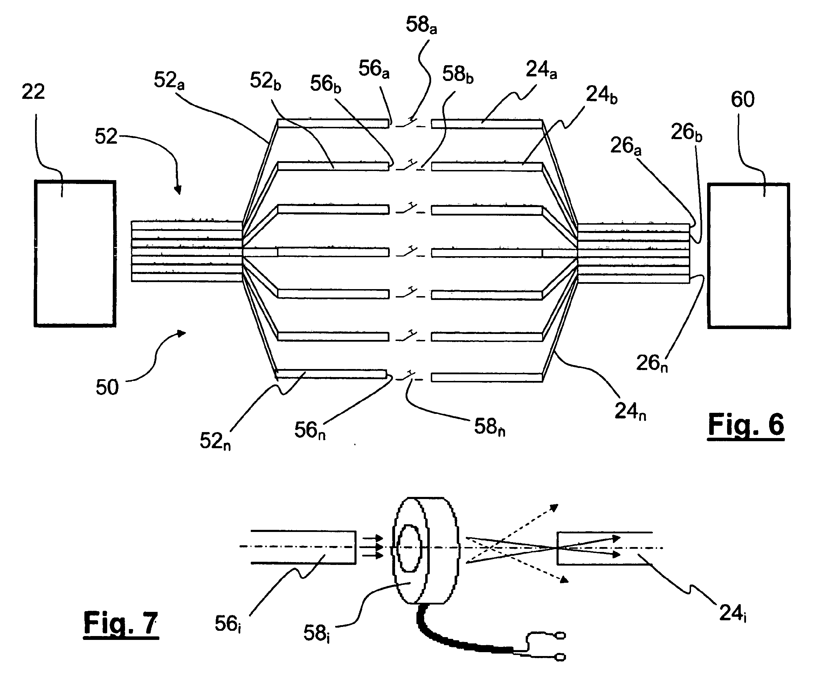

On a représenté schématiquement sur la Figure 6 un troisième mode de réalisation d'un ensemble projecteur utilisable pour mettre en oeuvre le procédé selon la présente invention. Cet ensemble projecteur, désigné globalement par la référence 50, comporte cette fois une source lumineuse commune 22. Cette source lumineuse commune 22 est constituée d'une ou plusieurs sources distinctes, mais dont les flux lumineux sont tous concentrés en un seul endroit. On pourra par exemple utiliser un miroir de module elliptique, tel qu'il a été rappelé plus haut, en disposant une lampe à décharge au premier foyer d'un miroir sensiblement en forme d'ellipsoïde de révolution, et en considérant la tache de concentration lumineuse formée au second foyer du miroir comme source lumineuse commune 22.

La lumière issue de la source lumineuse commune 22 est injectée dans un faisceau 52 de guides de lumière, de telle manière que la première extrémité de chaque guide individuel 52ₐ, 52_{b}, ..., 52ₙ reçoive sensiblement la même quantité de lumière. Les guides de lumière 52ₐ, 52_{b}, ..., 52ₙ dans lesquels la lumière de la source commune 22 a été injectée sont ensuite individualisés de manière à ce que leurs deuxièmes extrémités 56ₐ, 56_{b}, ..., 56ₙ serve de source lumineuse pour des guides de lumière 24ₐ, 24_{b}, ..., 24ₙ comme dans les modes de réalisation des Figures 3 et 4, chaque guide 52ⱼ étant associé à un guide unique 24ⱼ.

Comme dans les modes de réalisation des Figures 3 et 4, l'ensemble des deuxièmes extrémités 26ₐ, 26_{b}, ..., 26ₙ des guides 24ₐ, 24_{b}, ..., 24ₙ sont réunies de manière à être côte à côte, et alignées les unes avec les autres, au foyer d'un dispositif de formation du faisceau d'éclairage 60. Le dispositif 60 peut être constitué d'un système à réflexion, analogue au miroir 30 dans la Figure 3, ou d'un système à projection, analogue à la lentille 48 de la Figure 4, pour émettre un faisceau lumineux F organisé autour d'un axe optique X-X'.

La modulation de la lumière pénétrant dans les guides 24ₐ, 24_{b}, ..., 24ₙ pourra être obtenue en intercalant un dispositif obturateur modulateur 58ᵢ entre la face de sortie des guides 54ᵢ et la face d'entrée des guides 24ᵢ. Sur la Figure 6, les modulateurs 58ᵢ ont été représentés schématiquement par des interrupteurs.

Un dispositif obturateur 58ᵢ peut être constitué d'un simple obturateur mécanique ou électromécanique, permettant l'interposition d'un élément opaque sur le trajet des rayons lumineux entre les guides 52ᵢ et 24ᵢ ou la déviation contrôlée des rayons lumineux entre ces deux guides. On pourra par exemple utiliser des polymères piézo-électriques. On pourra également utiliser des lentilles défocalisables mécaniquement telles que celles qui sont connues sous le nom commercial de " Varioptic ", ou encore des micro-miroirs dont l'orientation est commandée électriquement. Des lentilles holographiques, de même que des lentilles plates défocalisables électriquement actuellement en cours de développement, peuvent également être utilisées à cette fin.

Le dispositif 58ᵢ peut également être constitué d'un obturateur ou d'un modulateur optique, par exemple un verre électrochromique interposé sur le trajet des rayons lumineux entre les guides 52ᵢ et 24ⱼ ou un système à cristaux liquides électro-commandables.

Avantageusement, on pourra utiliser des lentilles à focale variable électriquement 58ᵢ, placées sur le trajet des rayons lumineux entre les guides 52ᵢ et 24ᵢ. Une lentille de ce type est représentée sur la Figure 7.

Ce type de lentilles est notamment décrit dans le document EP 1 019 758, et son fonctionnement est basé sur le phénomène d'électromouillage. Généralement, une lentille de ce type comporte une enceinte remplie d'un premier liquide conducteur, tel que de l'eau, une goutte d'un second liquide étant disposée au repos sur une zone d'une première face d'une paroi isolante de l'enceinte, les deux liquides étant non miscibles, d'indices optiques différents et de densités voisines. Le premier liquide est conducteur, le second liquide est isolant, par exemple de l'huile, et on utilise des moyens pour appliquer une tension électrique entre le liquide conducteur et une électrode disposée sur la seconde face de la paroi. Sous l'effet d'un champ électrique appliqué de façon appropriée, la goutte d'huile présente un profil variable, car elle va mouiller de façon différente la paroi sur laquelle elle a été déposée, de même que la différence de tension superficielle entre les deux liquides est modifiée par l'application du champ électrique, ce qui a pour résultat de modifier la focale de la lentille à proprement parler composée de cette goutte.

Dans le cadre de la présente invention, on ajuste la focale en appliquant la tension appropriée, pour que la lentille focalise la lumière reçue du guide 56ᵢ sur la face d'entrée du guide 24ᵢ, ce qui transmet intégralement la lumière d'un guide à l'autre, ou qu'elle focalise cette lumière loin de la face d'entrée du guide 24ᵢ, comme on l'a représenté en traits pointillés sur la Figure 7, ce qui ne transmet que très peu de lumière d'un guide à l'autre.

Les modes de réalisation des Figures 3, 4 et 6 ont été représentés comme procurant une modulation de la lumière sur différents points d'une colonne. Bien entendu, il est possible de juxtaposer plusieurs de ces colonnes, pour obtenir une matrice de sources lumineuses 26ₐ, 26_{b}, ..., 26ₙ, dont chacune peut être commandée indépendamment des autres. Cette matrice disposée au foyer d'un réflecteur 30 comme sur la Figure 3, ou au foyer d'une lentille 48 comme sur la Figure 4, permettra d'obtenir un faisceau d'éclairage de la scène de route devant le véhicule, présentant dans des directions i, j et/ou k des zones d'ombre, telles que les zones AV, AR et PS sur la Figure 1.

Il suffira que le système de traitement 3, après avoir localisé dans les images captées par le système de détection 2 une source lumineuse extérieure telle que V1, V2 ou P sur la Figure 1, commande l'extinction des sources 22ᵢ, 22ⱼ et/ou 22ₖ pour créer les zones d'ombre AV, AR et/ou PS de la Figure 1, et ainsi éviter l'éblouissement des conducteurs des autres véhicules et/ou éviter d'être soi-même ébloui par les panneaux de signalisation.

Quel que soit le mode de réalisation, on pourra avantageusement prévoir que les faisceaux lumineux partiels Fᵢ, Fⱼ aient une faible ouverture numérique verticale, de l'ordre de quelques degrés, de manière à optimiser et affiner la modulation de l'éclairage procuré par le faisceau résultant F.

On pourra de plus prévoir que l'ouverture numérique des faisceaux partiels Fᵢ, Fⱼ proches de l'axe optique X-X' soit inférieure à celle des faisceaux partiels Fᵢ, Fⱼ dont les directions moyennes sont plus éloignées de l'axe optique X-X', de manière à accroître la définition de la modulation du faisceau lumineux F au voisinage de l'axe optique X-X' du projecteur 20, 40 ou 60. En effet, cet axe optique X-X', étant parallèle à l'axe longitudinal du véhicule, est dirigé dans une direction dans laquelle les informations sont les plus nombreuses pour le conducteur du véhicule : véhicules circulant dans le même sens ou dans le sens contraire, personnages et obstacles éventuels, et donc nécessitent d'être éclairées de manière modulée selon l'invention avec une sélectivité maximale. De plus, compte tenu des conditions normales de circulation sur route, à la fois l'intensité et la précision angulaire requises sont plus faibles latéralement que dans le prolongement de l'axe longitudinal du véhicule. On pourra par exemple envisager de calculer la taille des faisceaux lumineux partiels Fi, Fj en fonction de la taille angulaire d'un véhicule croisé vu par le conducteur, en fonction de sa distance et de la voie sur laquelle il circule

Dans un mode de réalisation préféré, les sources lumineuses 26ᵢ, 26ⱼ sont disposées selon une ou deux lignes horizontales superposées, de manière telle que les faisceaux lumineux partiels Fᵢ, Fⱼ soient jointifs.

De manière plus précise, le faisceau F résultant de la superposition des faisceaux partiels Fᵢ, Fⱼ est dans ce cas destiné à procurer un faisceau complémentaire à un faisceau de croisement. Si les sources lumineuses 26ᵢ, 26ⱼ sont disposées selon une seule ligne horizontale, les faisceaux partiels Fᵢ, Fⱼ sont tels que :
- leurs limites latérales se recouvrent,
- leurs limites inférieures sont alignées et coïncident avec la ligne de coupure réglementaire du faisceau de croisement, jusqu'à la remontée latérale à 15 degrés à l'extrémité droite de cette coupure (pour un sens de circulation à droite), et que
- leurs limites supérieures sont alignées et sont au dessus d'un plan horizontal passant par l'axe optique du faisceau de croisement.

Le faisceau total créé par cette ligne de sources lumineuses est voisin de celui d'un faisceau route complémentaire de faible hauteur, avec en outre la possibilité de moduler différentes portions de ce faisceau complémentaire, comme on l'a vu plus haut.

Si les sources lumineuses 26ᵢ, 26ⱼ, 26ₖ, 26ₗ sont disposées selon deux lignes horizontales superposées, les faisceaux partiels Fₖ, Fₗ de la ligne supérieure sont tels que :
- leurs limites latérales se recouvrent, et
- leurs limites inférieures sont alignées et coïncident avec les limites supérieures des faisceaux partiels Fi, Fⱼ de la ligne inférieure.

Dans le cas de deux lignes horizontales superposées, on pourra prévoir en outre que le faisceau total créé par cette deuxième ligne de sources lumineuses soit globalement moins étendu horizontalement que le faisceau total créé par la première ligne de sources lumineuses, et que les faisceaux partiels Fₖ, Fₗ créés par la ligne supérieure soient de plus grande étendue horizontale. Ceci permet de minimiser le nombre de sources lumineuses de la deuxième ligne, ce qui réduit de manière significative la complexité du système.

La ligne supérieure de sources lumineuses permet, dans un faisceau complémentaire à un faisceau de croisement, de moduler en hauteur l'intensité lumineuse émise pour diminuer l'éblouissement dû aux panneaux de signalisation situés en hauteur sur des portiques, tout en permettant, à moyenne distance, de ne pas éblouir les conducteurs des véhicules circulant en sens inverse et de hauteur supérieure à la moyenne, tels que les poids lourds et certains véhicules monospaces, tout en éclairant le bas de leur véhicule, qui reste ainsi visible.

Quelle que soit la disposition adoptée, à savoir une seule ligne ou deux lignes de sources, la deuxième ligne étant identique à la première ou ayant un nombre moindre de sources lumineuses, on dispose ainsi d'un faisceau lumineux complémentaire à un faisceau de croisement, modulable comme on l'a vu plus haut, et qui assure l'éclairage des zones de la scène de route qui ne sont pas éclairées par le faisceau de croisement réglementaire, et qui sont susceptibles de comporter un obstacle pertinent pour la conduite de nuit ou un objet réfléchissant potentiellement éblouissant.

On peut alors remarquer qu'en appliquant le principe du retour inverse de la lumière, il devient très facile, avec le projecteur selon l'invention, de localiser des sources lumineuses dans la scène de route devant le véhicule. On a vu en effet que l'invention propose de constituer un faisceau d'éclairage réglementaire par la superposition de plusieurs faisceaux lumineux élémentaires, chacun de ces faisceaux étant associé à une source lumineuse individuelle. Si donc on remplace les sources lumineuses 22ₐ, 22_{b}, ..., 22ᵢ des premier et deuxième exemples de réalisation schématisés sur les Figures 3 et 4, par des détecteurs de lumière 122ₐ, 122_{b}, ..., 122ₙ, on pourra savoir simplement si une ou plusieurs sources lumineuses sont présentes dans la scène de route devant le véhicule, et dans quelles régions de cette scène elles sont situées, en fonction du ou des détecteurs de lumière 122ᵢ fournissant un signal de sortie.

C'est ce qu'on a représenté sur la Figure 8, où l'on voit un exemple d'association d'une source lumineuse 22ᵢ avec un détecteur 122ᵢ. Les détecteurs 122i pourront avantageusement être constitués de photodiodes ou de phototransistors. Comme dans les modes de réalisation des Figures 3 et 4, la lumière émise par la source 22ᵢ est injectée dans un guide 24ᵢ à l'aide d'un injecteur 42ᵢ, la deuxième extrémité 26ᵢ de ce guide étant au foyer d'un système de formation du faisceau Fᵢ d'éclairage dans la direction i tel qu'un miroir 30 ou qu'une lentille 48.

Si une source lumineuse extérieure Sᵢ se trouve dans la même direction i dans le faisceau partiel Fᵢ, le système de formation de faisceau 30 ou 48 en formera une image sur la deuxième extrémité 26ᵢ du guide 24ᵢ, par application du principe du retour inverse de la lumière. En disposant alors un séparateur 70ᵢ sur le guide 24ᵢ, il sera possible d'aiguiller les rayons lumineux reçus de la source extérieure Sᵢ dans un guide 124ᵢ pour que ces rayons soient finalement reçus par un détecteur 122ᵢ. Ainsi, conformément à l'invention, si le détecteur 122ᵢ reçoit de la lumière, cela signifie qu'une source lumineuse extérieure Sᵢ se trouve dans le faisceau d'éclairage F du véhicule, et plus particulièrement dans le faisceau partiel Fᵢ, et qu'il s'agit donc de projecteurs ou de feux d'un autre véhicule ou d'un panneau de signalisation rétroréfléchissant.

Le détecteur 122ᵢ envoie alors un signal à un élément électronique 80ⱼ, qui commande alors l'extinction de la source 22ᵢ. L'ensemble des éléments électroniques 80ᵢ, peuvent être réunis dans un système électronique 80 de traitement des signaux générés par l'ensemble des détecteurs 122ᵢ, le système électronique 80 pouvant alors être beaucoup plus simple à réaliser, plus rapide et plus fiable que le système de traitement 3, tel que décrit en relation avec la Figure 2.

Il est alors possible de disposer des filtres colorés devant les détecteurs pour déterminer la nature de la lumière reçue par ces détecteurs. Si la lumière reçue provient d'un véhicule qui précède, la lumière reçue contient une majorité de rayons de couleur rouge. Si la lumière reçue provient d'un véhicule circulant en sens inverse, la lumière reçue est une lumière blanche, et contient pratiquement toutes les longueurs d'onde. En disposant un filtre rouge devant un détecteur, et un filtre transparent à toutes les couleurs devant un détecteur voisin, il sera possible de déterminer si la lumière reçue provient d'un véhicule qui précède et qui est suivi, ou d'un véhicule circulant en sens inverse et qui est croisé.

Si les deux détecteurs fournissent simultanément un signal supérieur à un seuil prédéterminé, ou si seul le détecteur avec filtre incolore fournit un signal supérieur à un seuil prédéterminé, cela signifie que la lumière reçue est blanche, et donc provient d'un véhicule circulant en sens inverse. Si seul le détecteur avec filtre rouge fournit un signal supérieur à un seuil prédéterminé, cela signifie que la lumière reçue est rouge, et donc provient d'un véhicule circulant dans le même sens.

On peut encore remarquer que les diodes électroluminescentes sont réversibles : en effet, toute diode électroluminescente, habituellement dédiée à l'émission d'un faisceau lumineux, est également apte à fonctionner comme détecteur optique dans une bande spectrale proche de son domaine spectral d'émission.

Toutefois, les diodes émettrices de lumière blanche, dont le flux est obtenu, au moins en partie, par conversion à l'aide de luminophores, sont peu sensibles comme détecteurs de lumière dans le spectre visible (elles ne le se sont en pratique qu'à des flux élevés de rayons ultraviolets). Néanmoins, il existe de nos jours des boîtiers miniatures de taille comparable à ceux des diodes précédemment citées et comportant de 2 à 4 puces émettrices dépourvues de phosphore, très rapprochées l'une de l'autre. Ces diodes permettent ainsi de créer un faisceau lumineux de couleur blanche par synthèse additive.

Cette solution est applicable dans le cadre des modes de réalisation décrits plus haut, et ce d'autant plus que les guides de lumière, qui peuvent en outre être de section transversale carrée, mélangent les modes qui s'y propagent, et donc mélangent les faisceaux colorés créés par le système d'injection, ces faisceaux colorés étant géométriquement partiellement séparés en raison de la non superposition rigoureuse des puces. Dans cette configuration, de telles diodes peuvent être utilisées convenablement comme capteurs, les puces rouges étant par exemple sensibles à pratiquement tous les rayons lumineux dans le spectre visible.

On peut également de manière avantageuse utiliser les diodes électroluminescentes pour que chacune remplisse les deux fonctions : l'émission d'un faisceau d'éclairage sur la scène de route devant le véhicule, et la détection de sources lumineuses extérieures situées dans ce faisceau d'éclairage.

Chaque diode électroluminescente sera alors pilotée par le circuit électronique de pilotage 25 de manière à fonctionner alternativement en un mode d'émission et en un mode de réception. Les intervalles de temps pendant lesquels les diodes fonctionnent en mode de réception sont choisis pour être suffisamment brefs pour ne pas perturber le faisceau d'éclairage et être imperceptibles aux yeux du conducteur. Les temps de montée et de descente des diodes électroluminescentes utilisées dans l'éclairage et la signalisation automobile sont très faibles, et en tout cas très inférieurs aux constantes de temps de l'oeil humain, telles que la persistance rétinienne, qui sont de l'ordre de 25 Hertz, ce qui autorise un fonctionnement en commutation avec de tels intervalles temporels brefs.

Le circuit électronique de pilotage 25 commande alors pour chaque diode électroluminescente pendant un premier intervalle temporel un fonctionnement de la diode en émission de lumière pour la formation d'un faisceau lumineux partiel dans le faisceau d'éclairage du véhicule, et, pendant un second intervalle temporel, un fonctionnement de la diode en détection optique de source lumineuse extérieure dans la direction du faisceau partiel associé à la diode considérée.

Le circuit électronique de pilotage 25 comporte également des circuits électroniques de détection reliés à chaque diode pour recevoir le signal de mesure produit par celle-ci en réponse à la réception d'un faisceau lumineux émis par une source extérieure pendant le second intervalle temporel, en mode réception, et fournir en sortie une information de détection découlant d'un traitement du signal de mesure.

Le circuit électronique de pilotage 25 comprend également pour chaque diode des circuits de commutation commandés pendant le second intervalle temporel, en mode réception, pour inhiber l'alimentation en énergie de la diode électroluminescente pendant le premier intervalle temporel, en mode émission, en cas de détection de la présence d'une source lumineuse extérieure pendant ce second intervalle temporel de réception.

Au lieu d'utiliser un montage tel que celui qui est représenté sur la Figure 8, on peut utiliser un boîtier miniature du type de ceux qui ont été décrits plus haut, comportant de 2 à 4 puces émettrices, dont une puce émet dans l'infrarouge. Il est alors possible d'utiliser cette dernière comme élément détecteur, puisqu'elle sera sensible à toutes les longueurs d'onde plus courtes que celle qu'elle émet.

Dans cette hypothèse d'un boîtier miniature comportant plusieurs puces émettrices de rayons de différentes longueurs d'onde, on peut de plus piloter ces puces à l'aide du circuit électronique de pilotage 25 de manière telle qu'une puce émettant dans une longueur d'onde déterminée, correspondant par exemple à la couleur verte, émette une impulsion très brève, de l'ordre de quelques millisecondes, et à basse fréquence, de l'ordre de quelques dizaines de Hertz, de manière à être imperceptible par l'oeil humain. Le circuit électronique de pilotage 25 pourra alors utiliser dans le créneau de temps considéré la puce émettant la couleur complémentaire de la première, par exemple la couleur rouge, comme détecteur. Il est ainsi possible de réaliser un détecteur de présence d'obstacle, même non éclairé, dans le secteur angulaire et dans la direction correspondant à ceux du faisceau partiel associé à cette diode.

L'utilisation d'un boîtier miniature comportant plusieurs puces émettrices de rayons de différentes longueurs d'onde présente de plus l'avantage de pouvoir discriminer la nature de la lumière reçue, à savoir blanche ou rouge, sans interposition de filtre coloré supplémentaire. En effet, les diodes sont sensibles aux rayons lumineux de longueur d'onde inférieure à celle de la lumière qu'elle émet. Il en résulte que la simple analyse des signaux émis par les diodes du boîtier permettra de connaître la couleur de la lumière qu'elles ont reçue.

On a donc bien réalisé un système d'éclairage capable de n'éclairer que certaines zones spécifiques de la route tout en assurant une extinction dans des zones dans lesquelles il est estimé que cet éclairage serait éblouissant, soit pour les conducteurs des autres véhicules circulant sur la même route, soit pour le conducteur lui-même du véhicule émettant le faisceau lumineux, du fait de la rétroréflexion provoquée par exemple par des panneaux de signalisation. La détection des zones dans lesquelles il convient de ne pas envoyer de rayons lumineux est effectuée de manière simple, rapide et fiable. Les deux fonctions de détection et d'éclairage modulé sont remplies par des systèmes simples et fiables, opérant en temps réel et ne nécessitant que des calculs simples et rapides.

On pourra prévoir que la totalité d'un faisceau d'éclairage de route soit constitué de faisceaux lumineux élémentaires comme on l'a décrit, de façon à présenter au conducteur un éclairage optimal de la scène de route. On pourra également prévoir que le faisceau d'éclairage modulé selon l'invention soit un faisceau additionnel au faisceau de croisement, situé au dessus de la coupure de ce faisceau de croisement.

L'invention fournit alors un éclairage de croisement supérieur à l'éclairage habituel, situé au-dessus de la coupure, tout en s'assurant que cet éclairage supplémentaire n'éblouit pas les conducteurs d'éventuels véhicules circulant sur la même route, et n'éblouit pas le conducteur lui-même par suite des rétroréflexions éventuelles sur des panneaux de signalisation. Cette lumière supplémentaire obtenue en zone I permet au conducteur de voir la scène de route au-delà de la coupure C.

Quel que soit son mode de réalisation, le projecteur de l'invention assure une meilleure perception et une meilleure visibilité de la route au conducteur. En effet, ce projecteur permet un éclairage classique de la scène de route et ainsi qu'un éclairage plus lointain, au-delà de la coupure. Même si cet éclairage plus lointain comporte des taches noires ou sombres, et même si celles-ci sont nombreuses, par exemple dans le cas d'une circulation intense, le conducteur a nécessairement une meilleure visibilité qu'avec un éclairage classique puisque cet éclairage plus lointain est un éclairage additionnel.

Dans une variante de l'invention, il est prévu de profiter des possibilités d'éclairage modulé pour adapter le faisceau lumineux émis par le projecteur qui vient d'être décrit à d'autres fonctionnalités. C'est ainsi qu'il est très facile d'adapter le faisceau lumineux de croisement de manière à en modifier la coupure C. On pourra par exemple très facilement adapter le faisceau lumineux à la réglementation pour un sens de circulation à droite ou à gauche. De même, on pourra très facilement remplir les nouvelles fonctions dites « AFS », de l'expression anglo-saxonne « Adaptive Front Lighting System », et moduler la lumière et réaliser ainsi des faisceaux lumineux compatibles avec les fonctions « Adverse Weather Lighting » ou « Motorway Lighting », c'est-à-dire les fonctions d'éclairage par temps de pluie ou d'éclairage sur autoroute.

Bien entendu, la présente invention n'est pas limitée aux modes de réalisation qui ont été décrits, mais l'homme du métier pourra au contraire lui apporter de nombreuses modifications qui rentrent dans son cadre.

C'est ainsi par exemple que le dispositif pourra être utilisé pour attirer l'attention du conducteur du véhicule sur un obstacle potentiel, et éclairant cet obstacle et en n'éclairant pas ou moins intensément son voisinage immédiat. De même, on pourra utiliser plusieurs dispositifs optiques, par exemple plusieurs miroirs tels que 30 dans la Figure 3 ou plusieurs lentilles telles que 48 dans la Figure 4, qui contribueront ensemble à former un faisceau unique, chaque miroir et/ou chaque lentille étant à son tour associé à un groupe de sources lumineuses.

## Revendications

1. - Projecteur d'éclairage modulé d'une scène de route pour véhicule comportant au moins une source lumineuse (26i, 26j) associée à un dispositif de formation d'un faisceau lumineux d'éclairage (30, 48),
tel qu'il comporte une pluralité de sources lumineuses (26i, 26j, 56i, 56j), chacune émettant en association avec le dispositif de formation d'un faisceau lumineux d'éclairage (30, 48) un faisceau lumineux partiel (Fᵢ, Fⱼ), la superposition des faisceaux lumineux partiels (Fᵢ, Fⱼ) formant un faisceau d'éclairage (F), chaque source lumineuse (26ᵢ, 26ⱼ) étant modulable individuellement pour contrôler le flux lumineux d'au moins un faisceau lumineux partiel (Fᵢ, Fⱼ) émis dans une direction prédéterminée (i, j) dans le faisceau d'éclairage (F), de manière à éteindre la source lumineuse d'au moins un faisceau partiel de manière à ce que le faisceau résultant ne contienne pas ou peu de rayons lumineux dans une direction prédéterminée, les sources lumineuses (26ᵢ, 26ⱼ) sont constituées par des deuxièmes extrémités (26ᵢ, 26ⱼ) de guides de lumière (24ᵢ, 24ⱼ) transmettant la lumière reçue par leur première extrémité, les premières extrémités des guides de lumière (24ᵢ, 24ⱼ) reçoivent chacune la lumière d'un dispositif d'émission de lumière (22i, 22j) dont l'intensité peut être commandée individuellement, les dispositifs d'émission de lumière (22i, 22j) sont constitués de diodes électroluminescentes (22i, 22j) émettant une lumière blanche, les diodes électroluminescentes (22i, 22j) sont pilotées par un circuit électronique de pilotage (25) et les diodes électroluminescentes (22i, 22j) sont pilotées par le circuit électronique de pilotage (25) de manière à fonctionner alternativement en un mode d'émission et en un mode de réception.

2. - Projecteur d'éclairage selon la revendication 1, **caractérisé en ce que** le dispositif de formation d'un faisceau lumineux d'éclairage (30) est constitué d'un miroir réflecteur (30) du type à surface complexe, au foyer duquel sont disposées les sources lumineuses (26ᵢ, 26ⱼ).

3. - Projecteur d'éclairage selon la revendication 1, **caractérisé en ce que** le dispositif de formation d'un faisceau lumineux d'éclairage (48) est constitué d'une lentille convergente (48) au foyer de laquelle sont disposées les sources lumineuses (26ᵢ, 26ⱼ).

4. - Projecteur d'éclairage selon la revendication 1, **caractérisé en ce que** les premières extrémités des guides de lumière (24ᵢ, 24ⱼ) reçoivent chacune la lumière d'un dispositif modulateur de lumière (58ᵢ, 58ⱼ) dont le facteur de transmission peut être commandé individuellement.

5. - Projecteur d'éclairage selon la revendication 4, **caractérisé en ce que** le dispositif modulateur de lumière (58ᵢ, 58ⱼ) est constitué d'un obturateur mécanique ou électromécanique, de polymères piézo-électriques, de lentilles défocalisables mécaniquement, de micro-miroirs.

6. - Projecteur d'éclairage selon la revendication 4, **caractérisé en ce que** le dispositif modulateur de lumière (58ᵢ, 58ⱼ) est constitué d'un obturateur ou d'un modulateur optique, d'un verre électrochromique ou d'un système à cristaux liquides électro-commandables.

7. - Projecteur d'éclairage selon la revendication 4, **caractérisé en ce que** le dispositif modulateur de lumière (58ᵢ, 58ⱼ) est constitué d'une lentille à focale variable électriquement.

8. - Projecteur d'éclairage selon l'une quelconque des revendications 1 à 7, **caractérisé en ce que** les dispositifs modulateurs de lumière (58ᵢ, 58ⱼ) sont intercalés entre la face d'entrée des guides de lumière (24ᵢ, 24ⱼ) et la face de sortie de guides de lumière primaires (52ᵢ, 52ⱼ) dont les faces d'entrée reçoivent toutes la lumière d'un dispositif émetteur de lumière unique.

9. - Projecteur d'éclairage selon la revendication 1, **caractérisé en ce que** des dispositifs injecteurs de lumière (42i, 42j) sont interposés entre les diodes électroluminescentes (22i, 22j) et les faces d'entrée des guides de lumière (24i, 24j).

10. - Projecteur d'éclairage selon l'une quelconque des revendications 1 à 9, **caractérisé en ce qu'**il comporte en outre un système de détection (2) de sources lumineuses externes (V1, V2, P) dans la scène de route devant le véhicule.

11. - Projecteur d'éclairage selon la revendication 10, **caractérisé en ce que** le système de détection (2) est constitué d'une caméra thermique, d'une caméra infrarouge ou d'une caméra vidéo CCD ou CMOS,

12. - Projecteur d'éclairage selon la revendications 10, **caractérisé en ce que** le système de détection (2) est constitué de photodiodes (122i, 122j), de phototransistors (122i, 122j) ou de diodes électroluminescentes (22i, 22j) utilisées en réception.

13. - Projecteur d'éclairage selon l'une quelconque des revendications 1 à 12, **caractérisé en ce que** les sources lumineuses (26i, 26j, 56i, 56j) sont disposées selon une ligne horizontale ou selon deux lignes horizontales superposées, le faisceau d'éclairage (F) étant un faisceau complémentaire à un faisceau de croisement.

## Claims

1. Headlight for modulated illumination of a road scene for a vehicle comprising at least one light source (26ᵢ, 26ⱼ) associated with a device for forming an illuminating light beam (30, 48),
such that it comprises a plurality of light sources (26ᵢ, 26ⱼ, 56ᵢ, 56ⱼ), each emitting, in association with the device forming an illuminating light beam (30, 48), a partial light beam (Fᵢ, Fⱼ), the superimposition of the partial light beams (Fᵢ, Fⱼ) forming an illuminating beam (F), each light source (26_{i,} 26ⱼ) being able to be modulated individually in order to control the light flux of at least one partial light beam (Fᵢ, Fⱼ) emitted in a predetermined direction (i, j) in the light beam (F), so as to switch off the light source of at least one partial beam so that the resulting beam contains no or few light rays in a predetermined direction, the light sources (26₁, 26ⱼ) are formed by the two ends (26₁, 26ⱼ) of light guides (24ᵢ, 24ⱼ) transmitting the light received by their first end, the first ends of the light guides (24ᵢ, 24ⱼ) each receiving the light from a light-emission device (22₁, 22ⱼ) the intensity of which can be controlled individually, the light-emission devices (22₁, 22ⱼ) consist of light emitting diodes (22₁, 22ⱼ) emitting a white light, the light emitting diodes (22₁, 22ⱼ) are controlled by an electronic control circuit (25) and the light emitting diodes (22₁, 22ⱼ) are controlled by the electronic control circuit (25) so as to function alternately in emission mode and reception mode.

2. Headlight according to claim 13, **characterised in that** the device forming an illuminating light beam (30) consists of a reflecting mirror (30) of the complex surface type, at the focus of which the light sources (26_{i,} 26ⱼ) are disposed.

3. Headlight according to claim 1, **characterised in that** the device forming an illuminating light beam (48) consists of a convergent lens (48) at the focus of which the light sources are disposed (26_{i,} 26ⱼ).

4. Headlight according to claim 1, **characterised in that** the first ends of the light guides (24ᵢ, 24ⱼ) each receive the light from a light-modulating device (58ᵢ, 58ⱼ) whose transmission factor can be controlled individually.

5. Headlight according to claim 4, **characterised in that** the light-modulating device (58ᵢ, 58ⱼ) consists of a mechanical or electromechanical obturator, piezoelectric polymers, mechanically defocusable lenses or micromirrors.

6. Headlight according to claim 4, **characterised in that** the light-modulating device (58ᵢ, 58ⱼ) consists of an obturator or an optical modulator, an electrochromic glass or an electrically controllable liquid crystal system.

7. Headlight according to claim 4, **characterised in that** the light-modulating device (58ᵢ, 58ⱼ) consists of a lens with an electrically variable focal length.

8. Headlight according to any one of claims 1 to 7, **characterised in that** the light-modulating devices (58ᵢ, 58ⱼ) are interposed between the inlet face of the light guides (24ᵢ, 24ⱼ) and the exit face of primary light guides (52ᵢ, 52ⱼ) whose entry faces all receive light from a single light emitting device.

9. Headlight according to claim 1, **characterised in that** light-injecting devices (42ᵢ, 42ⱼ) are interposed between the light emitting diodes (22ᵢ, 22ⱼ) and the entry faces of the light guides (24ᵢ, 24ⱼ).

10. Headlight according to any one of claims 1 or 9, **characterised in that** it also comprises a system (2) for detecting external light sources (V1, V2, P) in the road scene in front of the vehicle.

11. Headlight according to claim 10, **characterised in that** the detection system (2) consists of a thermal camera, an infrared camera or a CCD or CMOS video camera.

12. Headlight according to claim 10, **characterised in that** the detection system (2) consists of photodiodes (122ᵢ, 122ⱼ), phototransistors (122ᵢ, 122ⱼ) or light emitting diodes (22ᵢ, 22ⱼ) used in reception mode.

13. Headlight according to any one of claims 1 to 12, **characterised in that** the light sources (26_{i,} 26ⱼ, 56ᵢ, 56ⱼ) are disposed along a horizontal line or along two superimposed horizontal lines, the light beam (F) being a beam complementary to a dipped beam.

## Patentansprüche

1. Kraftfahrzeugscheinwerfer zur modulierten Beleuchtung einer Straßenszene, mit wenigstens einer Lichtquelle (26ᵢ, 26ⱼ), die einer Vorrichtung (30, 48) zur Bildung eines Beleuchtungslichtbündels zugeordnet ist,
der Art, dass er eine Vielzahl von Lichtquellen (26ᵢ, 26ⱼ, 56ᵢ, 56ⱼ) umfasst, die jeweils in Verbindung mit der Vorrichtung (30, 48) zur Bildung eines Beleuchtungslichtbündels ein Teillichtbündel (Fᵢ, Fⱼ) emittieren, wobei durch die Überlagerung der Teillichtbündel (Fᵢ, Fⱼ) ein Lichtbündel (F) gebildet wird, wobei jede Lichtquelle (26ᵢ, 26ⱼ) individuell modulierbar ist, um den Lichtstrom wenigstens eines in einer vorbestimmten Richtung (i, j) emittierten Teillichtbündels (Fᵢ, Fⱼ) in dem Beleuchtungslichtbündel derart zu steuern, dass die Lichtquelle wenigstens eines Teillichtbündels so gelöscht wird, dass das daraus resultierende Lichtbündel keine oder wenige Lichtstrahlen in einer vorbestimmten Richtung enthält, die Lichtquellen (26ᵢ, 26ⱼ) von zwei Enden (26ᵢ, 26ⱼ) von Lichtleitern (24ᵢ, 24ⱼ) gebildet sind, die das durch ihr erstes Ende empfangene Licht übertragen, die ersten Enden der Lichtleiter (24ᵢ, 24ⱼ) jeweils das Licht einer Lichtemissionsvorrichtung (22ᵢ, 22ⱼ) empfangen, dessen Intensität individuell gesteuert werden kann, die Lichtemissionsvorrichtungen (22ᵢ, 22ⱼ) von Leuchtdioden (22ᵢ 22ⱼ) gebildet sind, die weißes Licht emittieren, die Lichtemissionsvorrichtungen (22ᵢ, 22ⱼ) durch einen elektronischen Steuerkreis (25) gesteuert werden und die Leuchtdioden (22ᵢ, 22ⱼ) durch den elektronischen Steuerkreis (25) so gesteuert werden, dass sie alternativ in einem Emissionsmodus und in einem Empfangsmodus arbeiten.

2. Scheinwerfer nach Anspruch 1,
**dadurch gekennzeichnet, dass** die Vorrichtung (30) zur Bildung eines Beleuchtungslichtbündels von einem Spiegelreflektor (30) des Typs mit komplexer Oberfläche gebildet ist, in dessen Brennpunkt die Lichtquellen (26ᵢ, 26ⱼ) angeordnet sind.

3. Scheinwerfer nach Anspruch 1,
**dadurch gekennzeichnet, dass** die Vorrichtung (48) zur Bildung eines Beleuchtungslichtbündels von einer Sammellinse (48) gebildet ist, in deren Brennpunkt die Lichtquellen (26ᵢ, 26ⱼ) angeordnet sind.

4. Scheinwerfer nach Anspruch 1,
**dadurch gekennzeichnet, dass** die ersten Enden der Lichtleiter (24ᵢ, 24ⱼ) jeweils das Licht einer Lichtmodulationsvorrichtung (58ᵢ, 58ⱼ) empfangen, deren Transmissionsgrad individuell gesteuert werden kann.

5. Scheinwerfer nach Anspruch 4,
**dadurch gekennzeichnet, dass** die Lichtmodulationsvorrichtung (58ᵢ, 58ⱼ) durch eine mechanische oder elektromechanische Verschlussvorrichtung, durch piezoelektrische Polymere, durch mechanisch defokussierbare Linsen, durch Mikroreflektoren gebildet ist.

6. Scheinwerfer nach Anspruch 4,
**dadurch gekennzeichnet, dass** die Lichtmodulationsvorrichtung (58ᵢ, 58ⱼ) durch eine Verschlussvorrichtung oder einen optischen Modulator, ein elektrochromes Glas oder ein System mit elektrisch steuerbaren Flüssigkristallen gebildet ist.

7. Scheinwerfer nach Anspruch 4,
**dadurch gekennzeichnet, dass** die Lichtmodulationsvorrichtung (58ᵢ, 58ⱼ) durch eine Linse mit elektrisch veränderbarer Brennweite gebildet ist.

8. Scheinwerfer nach einem der Ansprüche 1 bis 7,
**dadurch gekennzeichnet, dass** die Lichtmodulationsvorrichtungen (58ᵢ, 58ⱼ) zwischen der Eintrittsfläche der Lichtleiter (24ᵢ, 24ⱼ) und der Austrittsseite von Primärlichtleitern (52ᵢ, 52ⱼ) eingefügt sind, deren Eintrittsflächen das gesamte Licht einer einzigen Lichtemissionsvorrichtung empfangen.

9. Scheinwerfer nach Anspruch 1,
**dadurch gekennzeichnet, dass** Lichteinkopplungsvorrichtungen (42ᵢ, 42ⱼ) zwischen den Leuchtdioden (22ᵢ, 22ⱼ) und den Eintrittsflächen der Lichtleiter (24ᵢ, 24ⱼ) eingefügt sind.

10. Scheinwerfer nach einem der Ansprüche 1 bis 9,
**dadurch gekennzeichnet, dass** er ferner ein System (2) zum Detektieren von externen Lichtquellen (V1, V2, P) in der Straßenszene vor dem Fahrzeug aufweist.

11. Scheinwerfer nach Anspruch 10,
**dadurch gekennzeichnet, dass** das Detektionssystem (2) durch eine Wärmebildkamera, eine Infrarotkamera oder eine CCD- oder CMOS-Videokamera gebildet ist.

12. Scheinwerfer nach Anspruch 10,
**dadurch gekennzeichnet, dass** das Detektionssystem (2) durch Photodioden (122ᵢ, 122ⱼ), Phototransistoren (122ᵢ, 122ⱼ) oder als Empfangsdioden verwendete Leuchtdioden (22ᵢ, 22ⱼ) gebildet ist.

13. Scheinwerfer nach einem der Ansprüche 1 bis 12,
**dadurch gekennzeichnet, dass** die Lichtquellen (26ᵢ, 26ⱼ, 56ᵢ, 56ⱼ) entlang einer horizontalen Linie oder entlang zweier übereinanderliegender horizontaler Linien angeordnet sind, wobei das Beleuchtungslichtbündel (F) ein zu einem Abblendlichtbündel komplementäres Lichtbündel ist.
